# EUROPÄISCHE PATENTANMELDUNG

(11) **EP 2 554 041 A1**
(43) Veröffentlichungstag der Anmeldung: **06.02.2013**
(21) Anmeldenummer: 11176326.4
(22) Anmeldetag: 02.08.2011
(51) Int. Cl.: A01G 3/08, A01G 23/095

(54) **Adapter für Helikoptersäge sowie Horizontalsäge für Helikopter**

(71) Anmelder: Heli-Energyservices SA, 76889 Kapellen-Drusweiler (DE)
(72) Erfinder: Aecherli, Urs, 6775 Ambri (CH); Kechler, Peter, 6775 Ambri (CH)
(74) Vertreter: Patentanwälte Freischem

(57) **Zusammenfassung**

Die Erfindung betrifft insbesondere eine Horizontalsäge für einen Helikopter, wobei der Erfindung die Aufgabe zugrunde liegt, eine Vorrichtung zur Verfügung zu stellen, mittels welcher der logistische Aufwand und die Kosten von Helikopter-Sägearbeiten reduziert werden können. Eine erfindungsgemäße Horizontalsäge zum hängenden Transport und Betrieb mit einem Helikopter (10) umfasst
a) eine hängend an dem Helikopter (10) befestigbare Antriebseinheit (12) zur Erzeugung und/oder Übertragung eines Antriebsdrehmoments,
b) einen Adapter (14) mit einem ersten Kupplungselement (38) zur Verbindung des Adapters (14) mit der Antriebseinheit (12), einem mit dem ersten Kupplungselement (38) gekoppelten Getriebe (34), mittels welchem eine erste Änderung der Richtung des Antriebsdrehmoments ermöglicht wird und einem mit dem Getriebe (34) gekoppelten zweiten Kupplungselement (40a) zur Verbindung des Adapters (14) mit einer Sägeeinheit (24) und
c) eine mit dem zweiten Kupplungselement (40a) gekoppelte erste Sageeinheit (24) umfassend ein Getriebe, mittels welchem eine zweite Änderung der Richtung des Antriebsdrehmoments ermöglicht wird.

## Beschreibung

Die Erfindung betrifft einen Adapter für eine Helikoptersäge sowie eine Horizontalsäge für einen Helikopter. Ferner betrifft die Erfindung die Verwendung einer Sägeeinheit einer bekannten Vertikat-Helikoptersäge,

Aus dem Stand der Technik sind die nachstehend näher erläuterten Helikoptersägen bekannt, die in der Regel dazu eingesetzt werden, Baumkronen oder Teile davon zu entfernen, die in Bereiche gewachsen sind oder in Bereiche hineinzuwachsen drohen, wo diese unerwünscht sind. Solche Bereiche sind beispielsweise Waldschneisen, durch welche Stromleitungen, sonstige Versorgungsleitungen, Lifte, Bergbahnen oder sonstige Bauten verlaufen,

In DE 298 05 580 U1 sind zwei verschiedene Sägevorrichtungen zur Beseitigung von Astwerk und Baumwipfeln beschrieben. Die Figuren 1 und 2 der genannten Druckschrift nehmen Bezug auf eine Vertikalsäge mit zehn in vertikaler Richtung übereinander angeordneten runden Sägeblättern mit einem Sägeblattdurchmesser von 55 cm, die senkrecht von einem Helikopter herunterhängen und zum Beschneiden von im Wesentlichen horizontal gewachsenen Ästen dient. Die Figuren 3 und 4 der genannten Druckschrift nehmen Bezug auf eine Horizontalsäge mit zwei in horizontaler Richtung nebeneinander angeordneten runden Sägeblättern mit einem Sägeblattdurchmesser von 1 m, die zum Beschneiden von im Wesentlichen vertikal gewachsenen Ästen mit Durchmessern von mehr als 5 cm und Baumkronen bestimmt sind.

In DE 698 19 937 T2 ist eine Horizontalsäge beschrieben, die ähnlich gestaltet ist wie die in DE 298 05 580 U1 beschriebene Horizontalsäge,

In US 5,961,070 A ist eine Vertikalsäge beschrieben, die als Schneidwerkzeug eine Kette umfasst.

Eine modular aufgebaute Vertikalsäge ist unter dem Produktnamen Uppercut S10 von der Firma Helimatic AB (Schweden) erhältlich, vgl, http://www.helimatic.se/ Diese besteht aus Sägeantrieben und Abstandmodulen, wobei die Abstandsmodule dazu dienen, ein Antriebsmoment von einem auf einer Seite des Abstandsmoduls angeordneten Sägeantrieb auf einen auf der gegenüberliegenden Seite des Abstandsmoduls angeordneten Sägeantrieb zu übertragen. Durch wechselweise Anordnung und Verbindung von Sägeantrieben und Abstandsmodulen kann die Länge der Vertikalsäge variiert werden.

Eine weitere Vertikalsage und eine weitere Horizontalsäge, die ähnlich aufgebaut sind wie die vorstehend erwähnten Sägen, sind auf der Internetseite http://www.helimatic-gmbh.de/de4.htm beschrieben.

Nachteilig an den existierenden Heijkoptersägen ist, dass ein hoher logistischer Aufwand erforderlich ist, wenn Vertikalsägen und Horizontalsägen in derselben Trasse zum Einsatz kommen sollen, da in diesem Fall zwei unterschiedliche Sägesysteme mitgeführt werden müssen. Die Kosten für die Durchführung von Helikopter-Sägearbeiten, bei denen Horizontalsägen und Vertikalsägen zum Einsatz kommen, sind daher relativ hoch.

Der Erfindung liegt die Aufgabe zugrunde, eine Vorrichtung zur Verfügung zu stellen, mittels welcher der logistische Aufwand und die Kosten von Helikopter-Sägearbeiten reduziert werden können.

Die Lösung der Aufgabe erfolgt erfindungsgemäß mit einem Adapter gemäß Anspruch 1, mit einer Helikoptersäge umfassend einen solchen Adapter sowie durch die Verwendung einer oder mehrerer Sägeeinheiten einer Vertikaisäge mit einem Adapter.

Ein erfindungsgemäßer Adapter für eine Helikoptersäge zum hängenden Transport und Betrieb mit einem Helikopter umfasst:
a) ein erstes, auf der Oberseite des Adapters angeordnetes Kupplungselement zur Verbindung des Adapters mit einer Antriebseinheit,
b) ein zweites, an einer der Seiten des Adapters angeordnetes Kupplungselement zur Verbindung des Adapters mit einer ersten Abtriebseinheit,
c) ein auf der gegenüberliegenden Seite des zweiten Kupplungselements angeordnetes drittes Kupplungselement zur Verbindung des Adapters mit einer zweiten Abtriebseinheit und
d) ein Getriebe zur Übertragung eines über die Antriebseinheit und das erste Kupplungselement eingeleiteten Antriebsdrehmoments mittels des zweiten Kupplungselements und des dritten Kupplungselements auf die Abtriebseinheiten.

Der erfindungsgemäße Adapter ermöglicht es, die Antriebseinheit einer Vertikalsäge mit Sägeeinheiten solcher Vertikalsägen derart zu koppeln, dass die Sägeeinheiten der Vertikalsägen eine neuartige Horizontalsäge bilden. Dies hat den Vorteil, dass für Vertikalsägearbeiten und Horizontalsägearbeiten lediglich ein bekanntes Vertikalsägesystem und der erfindungsgemäße Adapter benötigt werden. Die Anschaffung und der mit dem Transport einer Horizontalsäge verbundene logistische Aufwand entfallen. Stattdessen muss der erfindungsgemäße Adapter transportiert werden, und es entsteht ein Umrüstaufwand, wenn das Vertikalsägesystem zu einem Horizontalsägesystem umgebaut werden muss. Da der Aufwand für den Transport und die Umrüstarbeiten zur Verwendung eines erfindungsgemäßen Adapters deutlich günstiger sind als die Kosten für die Anschaffung und den logistischen Aufwand einer Horizontalsäge, ermöglicht der Einsatz eines erfindungsgemäßen Adapters deutliche Kosteneinsparungen bei Helikopter-Sägearbeiten, Darüber hinaus ermöglichen der Einsatz des erfindungsgemäßen Adapters und die dadurch gegebene Bauart der Horizontalsäge die technische Ausführung von Schnitten
a) an vertikal orientierten Ästen und Baumspitzen ab einem Durchmesser von 0,5 cm und
b) unterhalb der Leitungsseile in einer Tiefe von 2,00 bis 2,40 m in das Leitungsprofil von Freileitungstrassen,

Zum leichteren Verständnis der Erfindung wird nachfolgend zunächst der unabhängige Vorrichtungsanspruch hinsichtlich der Horizontalsäge erläutert:

Eine erfindungsgemäße Horizontalsäge zum hängenden Transport und Betrieb mit einem Helikopter umfasst
a) eine hängend an dem Helikopter befestigbare Antriebseinheit zur Erzeugung und/oder Übertragung eines Antriebsdrehmoments.
b) einen Adapter mit einem ersten Kupplungselement zur Verbindung des Adapters mit der Antriebseinheit, einem mit dem ersten Kupplungselement gekoppelten Getriebe, mittels welchem eine erste Änderung der Richtung des Antriebsdrehmoments ermöglicht wird und einem mit dem Getriebe gekoppelten zweiten Kupplungselement zur Verbindung des Adapters mit einer Sägeeinheit und
c) eine mit dem zweiten Kupplungselement gekoppelten Sägeeinheit, umfassend ein Winkelgetriebe, mittels welchem eine zweite Änderung der Richtung des Antriebsdrehmoments ermöglicht wird.

Die erfindungsgemäße Horizontalsäge basiert auf einem Antriebskonzept, das im Vergleich zu dem Antriebskonzept bekannter Horizontalsägen relativ kompliziert ist, da die Richtung des Antriebsdrehmoments zwei mal geändert wird. Die erfindungsgemäße Horizontalsäge hat den Vorteil, dass sie bei bereits vorhandener und kompatibler Vertikalsäge nur geringe Zusatzkosten verursacht und der logistische Aufwand beim Einsatz der vorhandenen Vertikalsäge und der erfindungsgemäßen Horizontalsäge deutlich reduziert ist,

Als Adapter einer erfindungsgemäßen Horizontalsäge wird vorzugsweise ein Adapter gemäß Anspruch 1 verwendet, der eine Antriebsseite und zwei gegenüberliegende Abtriebsseiten aufweist.

Unter einer Antriebseinheit im Sinne der Erfindung wird insbesondere ein an einem Helikopter hängend gelagerter Verbrennungsmotor verstanden, wie er seit Jahrzehnten im Zusammenhang mit Vertikalsägen eingesetzt wird. Derartige Motoren sind üblicherweise vom Helikopter aus steuerbar. Bei bekannten Motoren lassen sich vom Helikopter aus die Zündung ein- und ausschalten, der Motor aktivieren und die Drehzahl regeln. Auf den eingangs genannten Stand der Technik wird daher hiermit noch einmal verwiesen. Der Fachmann kann als Antriebseinheit im Rahmen seiner Fachkenntnisse auch andere adäquate Mittel einsetzen, beispielsweise einen Elektromotor oder einen pneumatischen Antrieb,

Das Getriebe eines erfindungsgemäßen Adapters verteilt das Antriebsdrehmoment vorzugsweise gleichmaßig auf die erste Abtriebseinheit und die zweite Abtriebseinheit, so dass alle Abtriebseinheiten, insbesondere als Abtriebseinheiten eingesetzte Sägeeinheiten, mit dem gleichen Abtriebsdrehmoment versorgt werden.

In einer praktischen Ausführungsform sind das zweite Kupplungselement und das dritte Kupplungselement derart gestaltet, dass bekannte Winkelgetriebe für Sägeantriebe als Abtriebseinheiten unmittelbar mit diesen verbindbar sind. Dazu können das zweite Kupplungselement und das dritte Kupplungselement beispielsweise als Lamellenkupplungen (z.B. des Typs Escodisc DLC 28) ausgebildet sein, wenn der Adapter für den Einsatz mit Sägeeinheiten bestimmt ist, die ebenfalls derartige Lamellenkupplungen aufweisen. Lamellenkupplungen werden bei mehreren der vorstehend beschriebenen Vertikalsäge-Systemen eingesetzt und haben den Vorteil, dass sie Winkel-, Axial- und Radial-Versatz ausgleichen können,

In einer weiteren praktischen Ausführungsform des erfindungsgemäßen Adapters weist dieser im Bereich der Kupplungselemente jeweils ebene Anlageflächen und Mittel zur formschlüssigen Verbindung eines Anschlusselements auf. Anschlusselemente kann antriebsseitig insbesondere ein Verbrennungsmotor sein, wie er von Vertikalsägen bekannt ist. Abtriebsseitig können dies insbesondere Sägeeinheiten sein, wie sie derzeit bei Vertikalsägen eingesetzt werden. Als einfache und kostengünstige Mittel zur formschlüssigen Verbindung des Adapters mit Anschlusselementen können an dem Adapter und vorzugsweise in den Anlageflächen Durchgangslöcher für Schraubverbindungen vorgesehen sein.

Wenn abtriebsseitig als Anschlusselemente Sägeeinheiten bekannter Vertikalsägen eingesetzt werden sollen, ist es vorteilhaft, wenn im Bereich des zweiten Kupplungselements und des dritten Kupplungselements jeweils eine Ausnehmung, vorzugsweise zentral in einer ebenen Anlagefläche, vorgesehen ist. Eine solche Ausnehmung weist in einer besonders bevorzugten Ausführungsform ein im Vertikalschnitt des Adapters halbkreisförmiges Profil auf. Eine solche Gestaltung ermöglicht es, von Vertikalsägen bekannte Winkelgetriebe unmittelbar mit dem Adapter zu verbinden, insbesondere zu verschrauben. Dabei fügt sich eine Seite des Winkelgetriebes in die Ausnehmung des Adapters ein.

Das erste Kupplungselement ist vorzugsweise als Kardanwelle ausgebildet, was den Vorteil hat, dass Winkelveränderungen zwischen einer mit dem Adapter verbundenen Antriebseinheit und dem Adapter bzw. dem in dem Adapter angeordneten Getriebe ausgeglichen werden können. Vorzugsweise sind an der Kardanwelle auch Mittel vorgesehen, die einen Längenausgleich ermöglichen.

In einer weiteren praktischen Ausführungsform ist der erfindungsgemäße Adapter T-förmig ausgebildet, und die Kupplungselemente sind an den freien Enden des T-förmigen Adapters angeordnet. In diesem Fall lässt sich das Gehäuse eines Adapters kostengünstig durch senkrechte Anordnung und Verschweißung zweier Trägerprofile herstellen.

Ein erfindungsgemäßer Adapter kann hinsichtlich der Stabilität und insbesondere hinsichtlich aufzunehmender Zugkräfte weiter verbessert werden, wenn der zentrale Mittelsteg einen trapezförmigen Abschnitt aufweist, wobei die Breite mit zunehmendem Abstand von dem ersten Kupplungselement zunimmt. Zugkräfte wirken auf den erfindungsgemäßen Adapter insbesondere durch das Eigengewicht des Adapters und durch an dem Adapter befestigte Elemente (z,B. mehrere Sägeeinheiten).

Ein für denerfindungsgemäßen Adapter besonders geeignetes Getriebe ist ein Spiralkegelgetriebe, insbesondere ein Einweg-Abzweig-Spiralkegelgetriebe. Derartige Getriebe sind zwar am Markt bereits für andere Einsatzzwecke verfügbar. Es hat sich jedoch gezeigt, dass durch Modifikation eines solchen Getriebes die Langlebigkeit eines erfindungsgemäßen Adapters deutlich verbessert werden kann. Dies gilt insbesondere, wenn das Spiralkegelgetriebe abtriebsseitig Flanschlager umfasst, die jeweils eine Fläche für Wellendichtringe aufweisen, an welchen sich in Abtriebsrichtung zur Wellenmitte jeweils ein Bund anschließt. Diese Gestaltung des Spiralkegelgetriebes hat den Vorteil, dass ein Herausdrücken des Wellendichtrings bei erhöhtem Innendruck im Getriebe vermieden werden kann.

Wenn ein erfindungsgemäßer Adapter für die Verwendung mit modularen Sägeeinheiten mit Getrieben sowie Abstandsmodulen zum Koppeln mehrerer Sägeantriebe vorgesehen ist, ist es vorteilhaft, wenn die Länge des Adapters der Länge der Abstandsmodule der entsprechenden Sägeeinheit entspricht. In diesem Fall sind zwei mit dem Adapter verbundene Sägeeinheiten in gleicher Art und Weise zueinander beabstandet wie im Falle der Verwendung in einer Vertikalsäge mit Abstandsmodulen. Dies hat den Vorteil, dass mehrere sich seitlich an dem Adapter anschließende Sägeeinheiten sich zu einer breiten Sägefläche zusammenfügen lassen, die entlang der gesamten Sägefläche zwischen zwei Sägeeinheiten stets die gleichen Schnitteigenschaften aufweist.

Mit Sägeelementen sind nicht nur kreisförmige Sägeblätter gemeint, wie sie in der Beschreibungseinleitung genannt sind, sondern auch der Einsatz sonstiger Sägeblattgeometrien, der Einsatz von Ketten sowie der Einsatz sonstiger bekannter Sägeelemente.

In einer praktischen Ausfuhrungsform der erfindungsgemäßen Horizontalsäge sind beidseits des Adapters eine identische Zahl von Sägeeinheiten angeordnet, vorzugsweise 2-7 kreisförmige Sägeeinheiten (bevorzugter Radius: 30-100 cm, insbesondere 55 cm) mit entsprechenden Winkelgetrieben. In diesem Fall ist das Gewicht der Sägeeinheiten beidseits des Adapters gleichmäßig verteilt, so dass der Adapter und die mit dem Adapter verbundenen Sägeeinheiten eine horizontale Position anstreben, wenn außer der Gravitation keine Kräfte wirken.

Es ist vorteilhaft, wenn das Getriebe des Adapters und die Getriebe der Sägeelemente derart ausgelegt sind, dass die Sägeblätter unmittelbar nebeneinander angeordneter Sägeeinheiten gleichläufig drehen. Dabei können folgende Varianten unterschieden werden.

Gemäß einer Variante A drehen die Sägeelemente, insbesondere kreisförmige Sägeblätter, aller Sägeeinheiten zur Mitte des Adapters hin. In diesem Fall besteht zwar die Gefahr, dass in der Mitte des Adapters, wo zwei Sägeblätter aufeinander zudrehen, sich Äste zwischen diesen Sägeblättern und dem Adapter einklemmen. Um dies zu vermeiden, kann jedoch an dem Adapter oder an einer Sägeeinheit ein sich in vertikaler Richtung erstreckendes Astabweiser-Element vorgesehen oder montiert sein, das zu den Sägeelementen der zwei unmittelbar unterhalb des Adapters angeordneten Sägeblättern einen Abstand von weniger als 10 mm, bevorzugt weniger als 5 mm und besonders bevorzugt weniger als 2 mm aufweist. Als Astabweiser-Element kann insbesondere eine mit dem Adapter verschraubte Platte eingesetzt werden, die in vertikaler Richtung nach unten hervorragt und nahezu bis an die Sägeblätter heranreicht.

Gemäß einer Variante B drehen die Sägeblätter aller Sägeeinheiten in die gleiche Richtung. In diesem Fall ist das Einklemmen von Ästen unwahrscheinlich.

Die Erfindung betrifft auch die Verwendung einer ein Getriebe, vorzugsweise ein Winkelgetriebe, umfassenden Sägeeinheit einer Vertikalsäge für einen Helikopter als Sägeeinheit einer Horizontal-Helikoptersäge durch Einsatz eines Adapters mit einem ersten Kupplungselement zur Verbindung des Adapters mit einer Antriebseinheit, einem mit dem ersten Kupplungselement gekoppelten Getriebe, mittels welchem eine Änderung der Richtung des Antriebsdrehmoments ermöglicht wird und einem mit dem Getriebe gekoppelten zweiten Kupplungselement zur Verbindung des Adapters mit der Sägeeinheit. Auf die bereits im Zusammenhang mit dem Adapter und der Horizontalsäge beschriebenen Vorteile wird hiermit verwiesen.

Weitere praktische Ausgestaltungen und Vorteile der Erfindung sind nachfolgend im Zusammenhang mit den Zeichnungen beschrieben. Es zeigen:

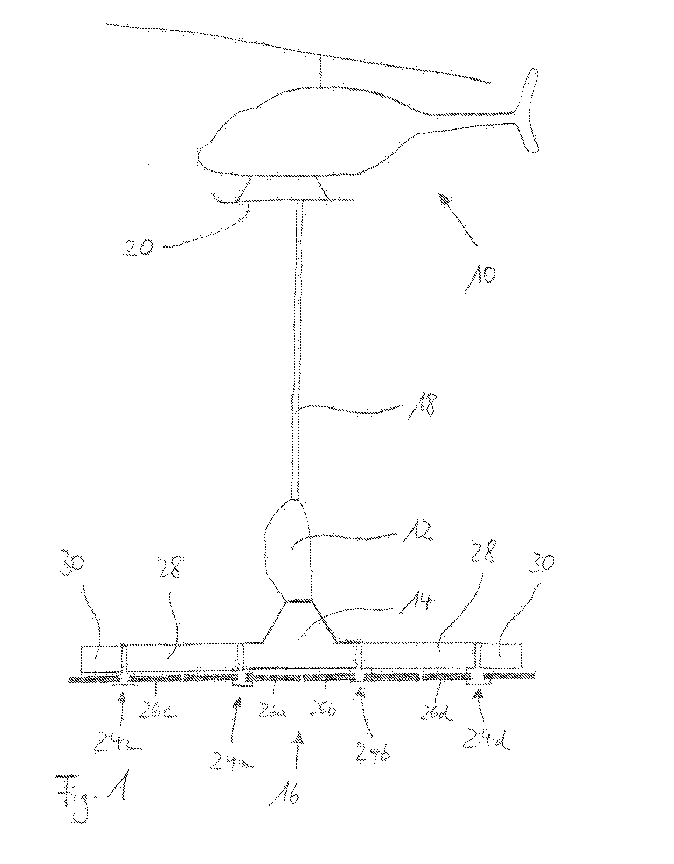

- Fig. 1: eine Ausführungsform einer erfindungsgemäßen Horizontalsäge mit einem erfindungsgemäßen Adapter,

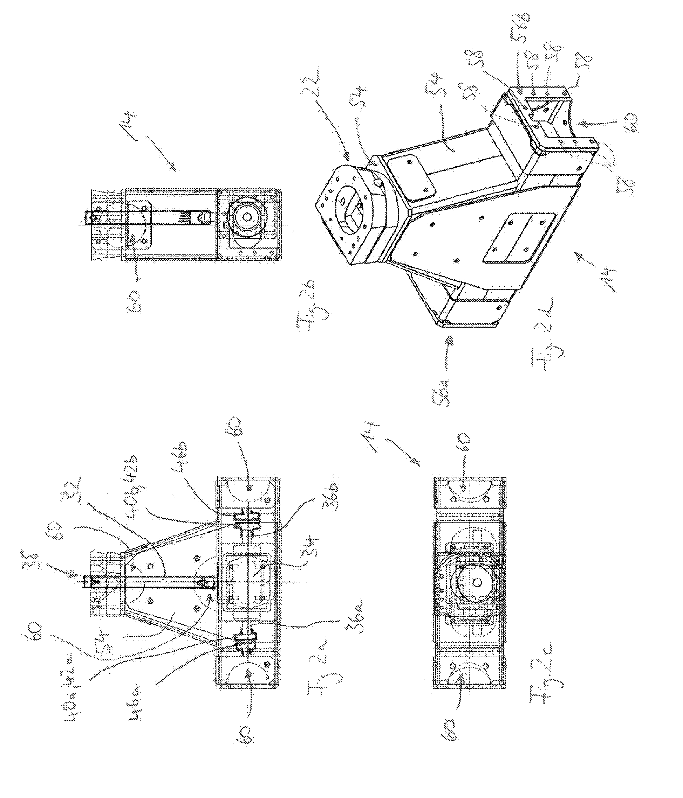

- Fig. 2a-d: den in Figur 1 dargestellten erfindungsgemäßen Adapter in verschiedenen Ansichten,

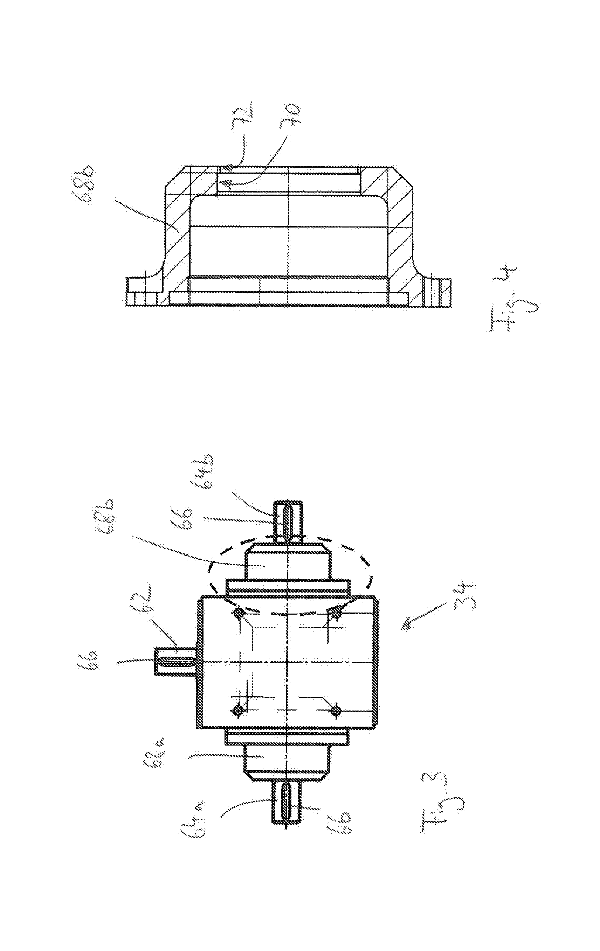

- Fig. 3: das Spiralkegelgetriebe des in Figur 2 dargestellten erfindungsgemäßen Adapters in einer Seitenansicht,
- Fig. 4: das in Figur 3 gestrichelt dargestellte Element des erfindungsgemäßen Adapters in einer Schnittdarstellung,

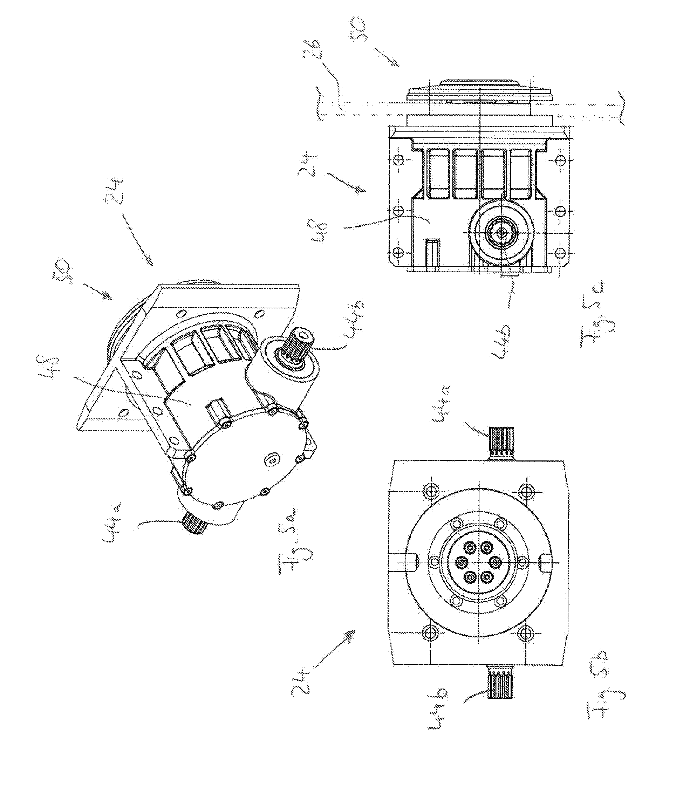

- Fig. 5: den in Figur 1 dargestellten Sägeantrieb mit Winkelgetriebe in verschiedenen Ansichten sowie

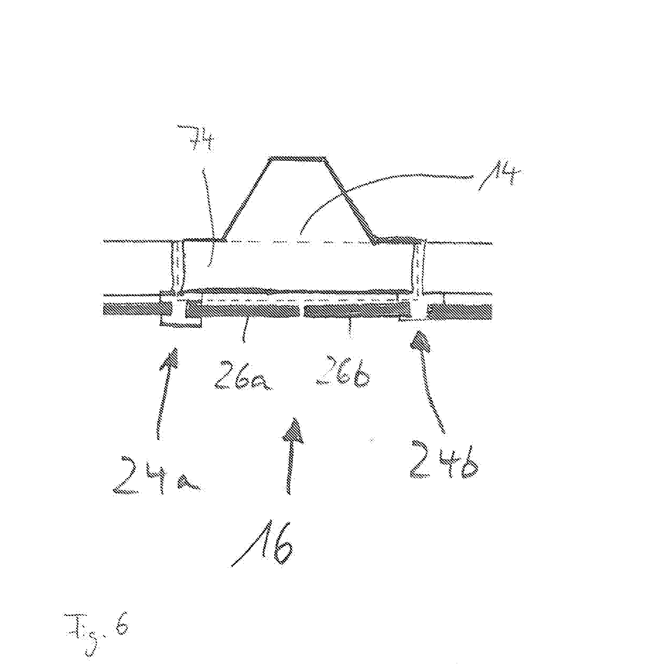

- Fig. 6: einen Ausschnitt der in Figur 1 dargestellten erfindungsgemäßen Horizontalsäge mit einem montierten Astabweiser-Element.

Figur 1 zeigt einen Helikopter 10, an welchem ein Motor 12, ein erfindungsgemäßer Adapter 14 und eine erfindungsgemäße Horizontalsäge 16 hängend befestigt sind. Der Motor 12 bildet die Antriebseinheit der Horizontalsäge 16.

Der Adapter 14 sowie einzelne Elemente des Adapters 14 sind in den Figuren 2-4 als separates Element dargestellt und werden im Zusammenhang mit diesen Figuren noch im Detail beschrieben.

Die Befestigung des Motors 12 an dem Helikopter 10 erfolgt über mehrere miteinander verbundene Rohre 18, die mit Hilfe eines nicht dargestellten Schäkels an den Kufen 20 des Helikopters hängend befestigt sind.

Der Motor 12 ist über eine Flanschverbindung mit einem auf der Oberseite des erfindungsgemäßen Adapters 14 angebrachten Anschlusselement 22 verschraubt, das in Figur 2 gezeigt ist.

An den Seiten des erfindungsgemäßen Adapters sind in der in Figur 1 dargestellten Ausführungsform der erfindungsgemäßen Horizontalsäge 16 - wiederum über Schraubverbindungen - eine erste Sägeeinheit 24a und eine zweite Sägeeinheit 24b mit entsprechenden kreisförmigen Sägeblätter 26a, 26b angeordnet. Weitere Sageeinheiten 24c, 24d mit kreisförmigen Sägeblättern 26c, 26d schließen sich jeweils seitlich an die erste Sägeeinheit 24a und die zweite Sägeeinheit 24b an. Eine Sägeeinheit 24 ist in Figur 5 im Detail dargestellt und wird nachfolgend noch näher beschrieben. Da die Sägeeinheiten 24 den Abtrieb einer erfindungsgemäßen Horizontalsäge 16 darstellen, werden diese auch als Abtriebseinheiten bezeichnet.

Zwischen den Sägeeinheiten 24a und 24c bzw. 24b und 24d sind Abstandelemente 28 angeordnet. Die vom Adapter aus betrachtet jeweils äußeren Seiten der Sägeeinheiten 24c, 24d sind durch Abschlusselemente 30 geschützt.

Die in Figur 1 dargestellten Rohre 18, der Motor 12 und die Sägeeinheiten 24 mit den Abstandsmodulen 28 und den Abschlusselementen 30 sind aus dem Stand der Technik bereits bekannt und wurden bislang ausschließlich für Helikopter-Vertikalsägen eingesetzt.

Die in Figur 1 dargestellte Horizontalsäge funktioniert wie folgt: Der Motor 12 lässt sich über eine vom Helikopter zu dem Motor führende Steuerleitung steuern. Vorzugsweise ist es möglich, die Zündung und den Motor 12 selbst vom Helikopter 10 aus ein- und auszuschalten sowie die Drehzahl des Motors 12 zu regeln. Als Motor 12 geeignet ist insbesondere ein Verbrennungsmotor mit einer Leistung von 45 bis 60 PS. Das von dem Motor 12 zur Verfügung gestellte Antriebsdrehmoment wird über eine antriebsseitig angeordnete Kardanwelle 32 in den Adapter eingeleitet und innerhalb des Adapters von einem Spiral-Kegelgetriebe 34 gleichmäßig auf zwei Abtriebszapfen 36a, 36b verteilt.

Die Kardanwelle 32 ermöglicht es nicht nur, einen Winkelversatz zwischen Motorwelle und Spiralkegelgetrieben 34 auszugleichen, sondern umfasst in der gezeigten Ausführungsform auch Mittel zum Ausgleich von Längendifferenzen. Da die Kardanwelle 32 unmittelbar mit der nicht dargestellten Antriebswelle des Motors 12 verbunden wird, kann diese auch als erstes Kupplungselement 38 bezeichnet werden, welches ausschließlich für den beschriebenen Zweck gefertigt wurde.

Die Antriebszapfen 36a, 36b sind drehfest mit einem zweiten Kupplungselement 40a und einem dritten Kupplungselement 40b verbunden, die es ermöglichen, den Adapter über die in Figur 2a angedeuteten Kupplungselemente 42a, 42b direkt mit den Sägeeinheiten 24a, 24b zu verbinden. Die in Figur 2a angedeuteten Kupplungselemente 42a, 42b sind in diesem Fall drehfest mit jeweils einem der Zapfen 44a, 44b der in Figur 5 dargestellten Sägeeinheit 24 verbunden. Dabei sind die Zapfen 44a, 44b wiederum drehfest mit Kupplungselementen 46a, 46b verbunden. Die Kupplungselemente 42a, 42b und die Kupplungselemente 46a, 46b sind vorzugsweise über ein nicht gezeigtes, zerstörbares Verbindungselement drehfest miteinander verbunden. Bei diesem Verbindungselement kann es sich beispielsweise um ein dünnes Metallelement handeln, das bei Überschreiten eines vorgegebenen Drehmoments zerbricht und die drehfeste Verbindung zwischen den Kupplungselementen 42a, 46a bzw. 42b, 46b löst. Eine derartige Verbindung kann beispielsweise durch den Einsatz einer sogenannten Esco-Kupplung, z.B. durch Verwendung des unter dem Namen escodisc DLC 28-28 erhältlichen Produkts oder eines ähnlichen Produkts der Esco Antriebstechnik GmbH realisiert werden.

Bei intakter Verbindung wird das Antriebsdrehmoment in der in Figur 1 gezeigten Ausführungsform von dem Motor über den Adapter auf den Sägeeinheiten 24a, 24b und von diesen auf die Sägeblätter 26a, 26b übertragen. Darüber hinaus übertragen die Sägeeinheiten 24a, 24b in bekannter Art und Weise das Antriebsdrehmoment über die Abstandsmodule 28 auf die Sägeeinheiten 24c, 24d und über diese auf die Sägeblätter 26c, 26d.

Durch die analoge Anordnung weiterer Abstandsmodule und weiterer Sägeantriebe kann die Breite einer erfindungsgemäßen Horizontalsäge nahezu beliebig variiert werden.

Die Sägeeinheiten 24, von denen eine in Figur 5 im Detail dargestellt ist, bestehen im Wesentlichen aus einem Gehäuse 48 mit einem darin angeordneten Winkelgetriebe (nicht gezeigt), zwei koaxial zueinander angeordneten Zapfen 44a, 44b und einer Vorrichtung 50 zur Aufnahme eines kreisförmigen Sägeblatts 26 (in Fig. 5c mit gestrichenen Linien angedeutet). Die Zapfen 44 sind im Betrieb der erfindungsgemäßen Horizontalsäge drehfest mit einem Kupplungselement 46 einer Esco-Kupplung verbunden und sind somit dazu ausgebildet, das von dem Adapter übertragene Antriebsdrehmoment aufzunehmen bzw. weilterzuleiten.

Bei der in Figur 1 dargestellten Horizontalsäge wird das Antriebsdrehmoment von dem Kupplungselement 42a, das Bestandteil des Adapters ist, auf das Kupplungselement 46a eines Zapfens 44a der Sägeeinheft 24a übertragen. Die Sägeeinheit 24a überträgt das Antriebsdrehmoment dann zum einen über das Winkelgetriebe auf das kreisförmige Sägeblatt 26 und zum anderen auf den anderen, koaxial angeordneten Zapfen 44b. Auf dem Zapfen 44b wiederum kann - sofern das Antriebsdrehmoment auf eine weitere Sägeeinheit (z.B. 24c) übertragen werden soll - wiederum ein Element einer Esco-Kupplung aufgesetzt sein, um das Antriebsdrehmoment in bekannter Art und Weise über ein Abstandsmodul 28 auf diese weitere Sägeeinheit zu übertragen. Soll das Antriebsdrehmoment auf keine weitere Sageeinheit 24 übertragen werden, wird der für die Weiterleitung des Antriebsdrehmoment vorgesehene Zapfen 44 mit einem Abschlusselement 30 abgedeckt, um ihn vor äußerten Einflüssen und Beschädigung zu schützen.

Der erfindungsgemäße Adapter 14 umfasst ein T-förmig gestaltetes Gehäuse 52, das im Wesentlichen dazu dient, das Spiralkegelgetriebe 34 sowie die mit dem Spiralkegelgetriebe verbundenen Kupplungselemente 38, 40a, 40b in ihrer Lage zu fixieren und zu schützen. Ferner sind an dem Gehäuse 52 Flansche 54, 56a, 56b mit ebenen Anlageflächen und Durchgangsöffnungen 58 vorgesehen, um die Befestigung des Anschlusselements 22 bzw. der Sägeeinheiten 24 per Schraubverbindung zu erleichtern. Ferner sind an dem Adapter im Bereich der Kupplungselemente mehrere halbkreisförmige Ausnehmungen 60 vorgesehen, um den Zugang zu den Kupplungselementen 38, 40a, 40b zu erleichtern bzw. eine Anbindung der Sägeeinheiten 24 zu ermöglichen. Sie dienen außerdem als Kontroll- und Revisionsöffnungen.

Das Spiralkegelgetriebe 34 ist in Figur 3 im Detail dargestellt. Es umfasst einen antriebsseitigen Zapfen 62 sowie zwei abtriebsseitige Zapfen 64a, 64b, die allesamt zur Herstellung einer drehfesten Verbindung mit weiteren Elementen eine Passfedernut 66 aufweisen. Wie in Figur 3 zu erkennen ist, umfasst das Spiralkegelgetriebe im Bereich der abtriebsseitigen Zapfen 64a, 64b jeweils ein glockenförmiges Flanschlager 68a, 68b. Das rechte glockenförmige Flanschlager, was sich in Figur 3 in dem gestrichelten Bereich befindet, ist in Figur 4 in einer Schnittdarstellung wiedergegeben. Dieses Flanschlager 68b weist im Bereich des Austritts des Zapfens 64b eine speziell bearbeitete Fläche 70 für den Sitz eines Wellendichtrings sowie einen in Austrittsrichtung folgenden Bund 72 mit kleinerem Durchmesser auf. In der gezeigten Ausführungsform beträgt der Durchmesser im Bereich der Fläche 70 45^{H8} und im Bereich des Bundes 72 43 (Angaben in mm). Durch das Vorsehen dieses Bundes, der bei dem Flanschlager 68a ebenfalls vorgesehen ist, wird verhindert, dass der im Bereich der Fläche 70 angeordnete Wellendichtring auch bei einem deutlich erhöhten Innendruck in dem Spiralkegelgetriebe 34 sich nicht nach außen drücken kann.

Figur 6 zeigt einen Ausschnitt der in Figur 1 dargestellten erfindungsgemäßen Horizontalsäge mit einem plattenartigen, rechteckigen Astabweiser-Element 74. Das Element, was in Figur 1 gestrichelt dargestellt ist, ist vorzugsweise eine Platte aus einem robusten Kunststoff oder Metall und fest von außen mit dem Adapter 14 verschraubt. Es ragt so weit nach unten, dass es nahezu an die Sägeblätter 26a, 26b heranreicht und verhindert somit, dass sich Äste zwischen der Oberseite der Sägeblätter 26a, 26b und der ca. 10 mm beabstandeten Unterseite der Vorrichtungen 50 bzw. der Unterseite des Adapters 14 einklemmen. Die Montage eines Astaberweiser-Elements ist insbesondere dann von Vorteil, wenn sich die Sägeblätter 26a, 26b gegenläufig zur Mitte des Adapters 15 drehen und somit dazu neigen, Äste in Richtung des Adapters zu befördern.

### Bezugszeichenliste

- 10: Helikopter
- 12: Motor / Antriebseinheit
- 14: Adapter
- 16: Horizontalsäge
- 18: Rohre
- 20: Kufen
- 22: Anschlusselement
- 24: Sägeeinheit / Abtriebseinheit
- 26: kreisförmige Sägeblätter
- 28: Abstandsmodule
- 30: Abschlusselemente
- 32: Kardanwelle
- 34: Spiral-Kegelgetriebe
- 36: Abtriebszapfen
- 38: erstes Kupplungselement
- 40a: zweites Kupplungselement
- 40b: drittes Kupplungselement
- 42: Kupplungselement
- 44: Zapfen
- 46: Kupplungselement
- 48: Gehäuse der Sägeeinheit
- 50: Vorrichtung zur Aufnahme des Sägeblatts
- 52: Gehäuse des Adapters
- 54: antriebsseitiger Flansch des Adapters
- 56: abtriebsseitige Flansche des Adapters
- 58: Durchgangsöffnungen
- 60: Ausnehmungen
- 62: antriebsseitiger Zapfen
- 64: abtriebsseitige Zapfen
- 66: Passfedernut
- 68: Flanschlager
- 70: Fläche für Wellendichtring
- 72: Bund
- 74: Astabweiser-Element

## Patentansprüche

1. Adapter für eine Helikoptersäge zum hängenden Transport und Betrieb mit einem Helikopter (10) umfassend
a) ein erstes, auf der Oberseite des Adapters angeordnetes Kupplungselement (38) zur Verbindung des Adapters mit einer Antriebseinheit (12),
b) ein zweites, an einer der Seiten des Adapters angeordnetes Kupplungselement (40a) zur Verbindung des Adapters mit einer ersten Abtriebseinheit (24a),
c) ein auf der gegenüberliegenden Seite des zweiten Kupplungselements (40a) angeordnetes drittes Kupplungselement (40b) zur Verbindung des Adapters mit einer zweiten Abtriebseinheit (24b) und
d) ein Getriebe (34) zur Übertragung eines über die Antriebseinheit (12) und das erste Kupplungselement (38) eingeleiteten Antriebsdrehmoments mittels des zweiten Kupplungselements (40a) und des dritten Kupplungselements (40b) auf die Abtriebseinheiten (24).

2. Adapter nach Anspruch 1, **dadurch gekennzeichnet, dass** das zweite Kupplungselement (40a) und das dritte Kupplungselement (40b) derart gestaltet sind, dass von Vertikal-Helikoptersägen bekannte Sägeeinheiten (24) als Abtriebseinheiten unmittelbar mit diesen verbindbar sind.

3. Adapter nach einem oder mehreren der vorstehenden Ansprüche, **dadurch gekennzeichnet, dass** im Bereich der Kupplungselemente (40a, 40b) jeweils eine ebene Anlagefläche und Mittel zur formschlüssigen Verbindung eines Anschlusselements ausgebildet sind.

4. Adapter nach einem oder mehreren der vorstehenden Ansprüche, **dadurch gekennzeichnet, dass** im Bereich des zweiten Kupplungselements (40a) und des dritten Kupplungselements (40b) jeweils eine Ausnehmung (60), vorzugsweise zentral in einer ebenen Anlagefläche, ausgebildet ist.

5. Adapter nach einem oder mehreren der vorstehenden Ansprüche, **dadurch gekennzeichnet, dass** das erste Kupplungselement (38) als Kardanwelle ausgebildet ist.

6. Adapter nach einem oder mehreren der vorstehenden Ansprüche, **dadurch gekennzeichnet, dass** das Gehäuse (52) des Adapters T-förmig ausgebildet ist und die Kupplungselemente (38, 40a, 40b) an den freien Enden des T-förmigen Gehäuses (52) angeordnet sind.

7. Adapter nach dem vorstehenden Anspruch, **dadurch gekennzeichnet, dass** der zentrale Mittelsteg einen trapezförmigen Abschnitt aufweist, wobei die Breite mit zunehmendem Abstand von dem ersten Kupplungselement (38) zunimmt.

8. Adapter nach einem oder mehreren der vorstehenden Ansprüche, **dadurch gekennzeichnet, dass** das Getriebe (34) ein Spiralkegelgetriebe (34) umfasst, vorzugsweise ein Spiralkegelgetriebe (34) mit abtriebsseitigen Flanschlagern (68), die eine Fläche (70) für den Sitz eines Wellendichtrings aufweist, an welchen sich in Abtriebsrichtung ein zur Wellenmitte erstreckender Bund (72) anschließt.

9. Adapter nach einem oder mehreren der vorstehenden Ansprüche zur Verwendung mit modularen Sägeeinheiten (24) einer Vertikalsäge mit Getrieben, um ein Antriebsmoment von einem auf einer Seite des Abstandsmoduls angeordneten ersten Zapfen (44a) auf ein Sägeelement sowie auf einen auf der gegenüberliegenden Seite des Abstandsmoduls angeordneten zweiten Zapfen (44b) zu übertragen und Abstandmodulen (28), um zwei Sägeeinheiten (24) beabstandet voneinander miteinander zu koppeln, **dadurch gekennzeichnet, dass** die Länge des Adapters der Länge der Abstandsmodule (28) entspricht.

10. Horizontalsäge zum hängenden Transport und Betrieb mit einem Helikopter (10) umfassend
a) eine hängend an dem Helikopter befestigbare Antriebseinheit (12) zur Erzeugung und/oder Übertragung eines Antriebsdrehmoments,
b) einen Adapter (14) mit einem ersten Kupplungselement (38) zur Verbindung des Adapters (14) mit der Antriebseinheit (12), einem mit dem ersten Kupplungselement (38) gekoppelten Getriebe (34), mittels welchem eine erste Änderung der Richtung des Antriebsdrehmoments ermöglicht wird und einem mit dem Getriebe (34) gekoppelten zweiten Kupplungselement (40a) zur Verbindung des Adapters (14) mit einer Sägeeinheit (24) und
c) eine mit dem zweiten Kupplungselement (40a) gekoppelte erste Sägeeinheit (24) umfassend ein weiteres Getriebe, mittels welchem eine zweite Änderung der Richtung des Antriebsdrehmoments ermöglicht wird.

11. Horizontalsäge nach dem vorstehenden Anspruch, **dadurch gekennzeichnet, dass** an dem Adapter (14) ein drittes Kupplungselement (40b) zur Verbindung des Adapters (14) mit einer zweiten Abtriebseinheit (24b) ausgebildet ist, das auf der dem zweiten Kupplungselement (40a) gegenüberliegenden Seite des Adapters (14) angeordnet ist und das Getriebe (34) das Antriebsdrehmoment auf die erste Abtriebseinheit (24a) und die zweite Abtriebseinheit (24b) verteilt, wobei als zweite Abtriebseinheit (24b) eine zweite Sägeeinheit (24b) mit dem Adapter (14) verbunden ist.

12. Horizontalsäge nach dem vorstehenden Anspruch, **dadurch gekennzeichnet, dass** beidseits des Adapters (14) eine identische Zahl von Sägeeinheiten (24) angeordnet sind.

13. Horizontalsäge nach dem vorstehenden Anspruch, **dadurch gekennzeichnet, dass** das Getriebe (34) des Adapters (14) und die Getriebe der Sägeeinheiten (24) derart ausgelegt sind, dass die Sägeelemente (26) unmittelbar nebeneinander angeordneter Sägeeinheiten (24) gleichläufig drehen.

14. Horizontalsäge nach einem oder mehreren der vorstehenden Ansprüche, **dadurch gekennzeichnet, dass** an dem Adapter (14) oder an einer Sägeeinheit (24) ein sich in vertikaler Richtung erstreckendes Astabweiser-Element (74) vorgesehen oder montiert ist, das zu den Sägeelementen (26) der zwei unmittelbar unterhalb des Adapters angeordneten Sägeeinheiten (24) einen Abstand von weniger als 10 mm, bevorzugt weniger als 5 mm und besonders bevorzugt weniger als 2 mm aufweist.

15. Verwendung einer ein Getriebe, insbesondere ein Winkelgetriebe, umfassenden Sägeeinheit einer Vertikalsäge für einen Helikopter (10) als Sägeeinheit (24) einer Horizontal-Helikoptersäge durch Einsatz eines Adapters (14) mit einem ersten Kupplungselement (38) zur Verbindung des Adapters (14) mit einer Antriebseinheit (12), einem mit dem ersten Kupplungselement (38) gekoppelten Getriebe (34), mittels welchem eine Änderung der Richtung des Antriebsdrehmoments ermöglicht wird und einem mit dem Getriebe (34) gekoppelten zweiten Kupplungselement (40a) zur Verbindung des Adapters mit der Sägeeinheit (24).
